# EUROPEAN PATENT APPLICATION

(11) **EP 3 533 596 A1**
(43) Date of publication of application: **04.09.2019**
(21) Application number: 17864610.5
(22) Date of filing: 10.10.2017
(51) Int. Cl.: B29D 30/00, B60C 5/00

(54) **METHOD AND DEVICE FOR PASTING A BAND-LIKE MEMBER TO TIRE INNER SURFACE**

(30) Priority: 31.10.2016 JP 2016212443
(71) Applicant: The Yokohama Rubber Co., Ltd., Minato-ku Tokyo 105-8685 (JP)
(72) Inventor: TAKAHASHI Yukihisa, Hiratsuka-shi Kanagawa 254-8601 (JP)
(74) Representative: Dilg, Haeusler, Schindelmann Patentanwaltsgesellschaft mbH
(86) International application number: PCT/JP2017/036671
(87) International publication number: WO 2018/079247

(57) **Abstract**

Provided is an attaching apparatus and an attaching method capable of efficiently attaching a band-like member such as a sound absorbing member to a tire inner surface. The method includes: disposing, on an inner side of a tire T, a traveling roller 2, and a rotary drum 3 including an outer circumferential surface opposed to a tire inner surface Ta with an interval therebetween; rotationally driving the rotary drum 3 by rotation of the rolling traveling roller 2, so as to relatively move an attaching apparatus 1 in a circumferential direction of the tire T; introducing and winding a band-like member B supplied from an outside of the tire T onto the outer circumferential surface of the rotary drum 3 in rotation via a guide portion 6; and compression-bonding and attaching the band-like member B to the tire inner surface Ta by the outer circumferential surface of the rotary drum 3.

## Description

### Technical Field

The present invention relates to an attaching apparatus and an attaching method for attaching a band-like member to a tire inner surface, and specifically relates to an attaching apparatus and an attaching method capable of efficiently attaching a band-like member such as a sound absorbing member to a tire inner surface.

### Background Art

In pneumatic tires, cavernous resonance caused by the vibration of the air in the tire is one cause of tire noise. When a tire is run, uneven road surfaces cause a tread portion to vibrate. The vibrations of the tread portion cause the air inside the tire to vibrate which causes cavernous resonance to be generated. As a measure to reduce such noise, a band-like sound absorbing member made of a porous material is attached in a tire circumferential direction of a tire inner surface (see, for example, Patent Document 1).

In the method and the apparatus for attaching a band-like sponge material (sound absorbing member) according to Patent Document 1, a wound body formed by spirally winding band-like sponge materials cut in advance by an attaching length is attached to a sponge holding frame. Then, a tire is rotated in a state in which one end of each band-like sponge material is attached to a tread inner surface, and the band-like sponge materials is sequentially removed from the sponge holding frame and adhered to the tread inner surface by an attaching roller. Accordingly, it is necessary to cut the sound absorbing member in advance by the attaching length to form the wound body for each tire, and to install the wound body in the sponge holding frame. Thus, there is a limit in improvement of the efficiency of attachment work of the band-like member.

### Citation List

### Patent Literature

Patent Document 1: JP 2007-168243 A

### Summary of Invention

### Technical Problem

An object of the present invention is to provide an attaching apparatus and an attaching method capable of efficiently attaching a band-like member such as a sound absorbing member to a tire inner surface.

### Solution to Problem

In order to achieve the above object, an attaching apparatus for attaching a band-like member to a tire inner surface of an embodiment of the present invention comprises: a traveling roller that rolls on the inner surface of the tire in a circumferential direction; a rotary drum disposed on an inner side of the tire, whose outer circumferential surface is opposed to the inner surface of the tire with an interval therebetween; a guide portion that introduces and winds a band-like member supplied from an outside of the tire onto the outer circumferential surface of the rotary drum in rotation; the rotary drum being rotationally driven by rotation of the rolling traveling roller; and the band-like member being compression-bonded and attached to the inner surface of the tire by the outer circumferential surface of the rotary drum.

An attaching method of a band-like member to a tire inner surface of an embodiment of the present invention comprises: disposing, on an inner side of the tire, a traveling roller, and a rotary drum whose outer circumferential surface is opposed to the inner surface of the tire with an interval therebetween; rotationally driving the rotary drum by rotation of the rolling traveling roller; introducing and winding a band-like member supplied from an outside of the tire onto the outer circumferential surface of the rotary drum in rotation via a guide portion; and compression-bonding and attaching the band-like member to the inner surface of the tire by the outer circumferential surface of the rotary drum.

### Advantageous Effects of Invention

According to an embodiment of the present invention, a band-like member can be continuously introduced and wound from an outside of a tire via a guide portion onto an outer circumferential surface of a rotary drum rotationally driven by the rotation of a traveling roller rotating on an inner surface of the tire. The band-like member can be continuously compression-bonded and attached to the inner surface of the tire by the outer circumferential surface of the rotary drum in rotation. Accordingly, it is unnecessary to cut by the attaching length and to wind the band-like member for each tire in advance. Accordingly, it is possible to improve the efficiency of attaching work while reducing man-hours.

### Brief Description of Drawings

FIG. 1 is an explanatory diagram exemplifying a side view of an inside of a tire in which an attaching apparatus of an embodiment of the present invention is provided.
FIG. 2 is an enlarged explanatory diagram of the attaching apparatus of FIG. 1.
FIG. 3 is a view in the direction of arrow A in FIG. 2.
FIG. 4 is an explanatory view exemplifying an outer circumferential surface of a drum with a part of a case of FIG. 3 omitted.
FIG. 5 is an explanatory diagram exemplifying a front view of another embodiment of the attaching apparatus of the present invention with a part of the case omitted.
FIG. 6 is an explanatory diagram exemplifying a front view of another embodiment of the attaching apparatus of the present invention with a part of the case omitted.

### Description of Embodiments

An attaching apparatus and an attaching method for attaching a band-like member to a tire inner surface according to an embodiment of the present invention will be described below with reference to the embodiments illustrated in the drawings.

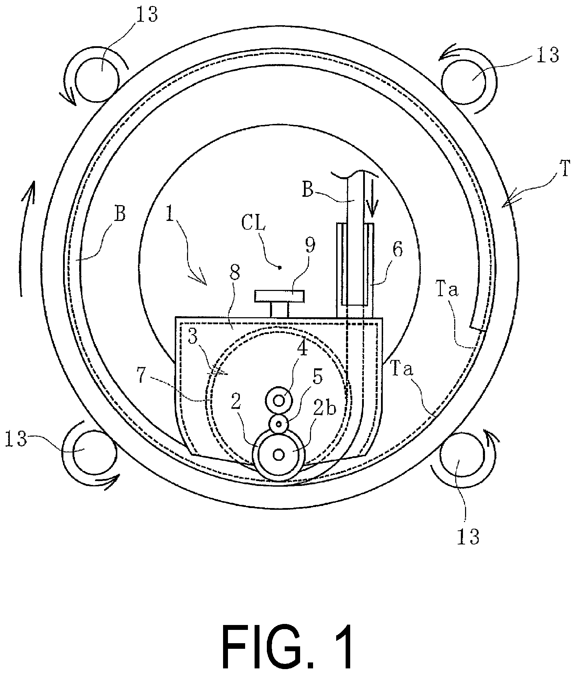

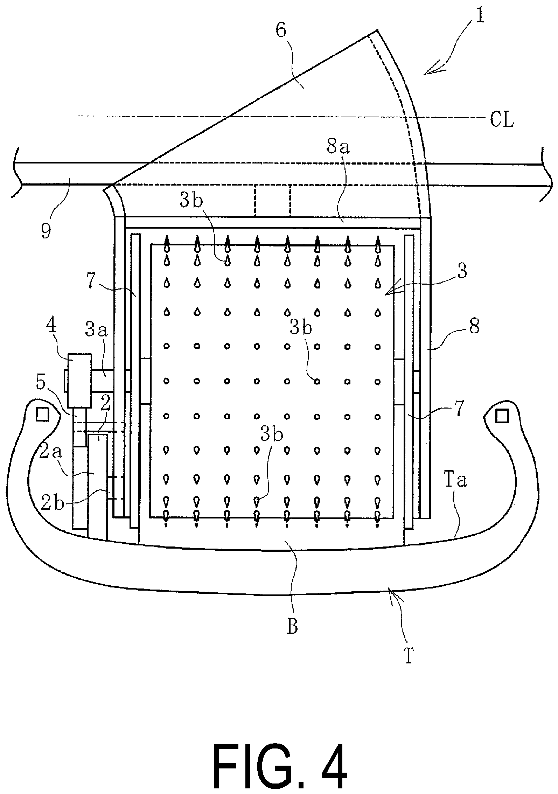

An attaching apparatus 1 for attaching a band-like member to a tire inner surface of an embodiment of the present invention exemplified in FIGS. 1 to 4 is used when a band-like member B such as a sound absorbing member is attached to an inner surface Ta of a tire T (hereinafter, referred to as the "tire inner surface Ta"). The tire inner surface Ta is a surface corresponding to an inner circumferential side of a tread surface of the tire T. In this embodiment, an adhering surface disposed on one surface of the band-like member B is covered with a release paper P. CL in the drawing indicates a tire axis extending in a tire lateral direction with respect to the center of the tire T in a side view.

The attaching apparatus 1 includes a traveling roller 2 and a rotary drum 3 disposed on an inner side of the tire T, and a guide portion 6. In this embodiment, the attaching apparatus 1 includes a case 8 covering the rotary drum 3. The shape of the case 8 is not particularly limited, but is, for example, a shaped formed along the outer shape of the rotary drum 3 as in this embodiment. An inlet 8a for receiving the band-like member B into the case 8 is formed on an upper portion of the case 8. An outlet 8b for feeding the band-like member B from the inside to the outside of the case 8 is formed on a lower portion of the case 8. A support arm 9 extending in the tire axial direction is attached to an upper end portion of the case 8.

The traveling roller 2 is attached to a support shaft 2a extending outward in the tire axial direction of the case 8 from one side surface in the tire axial direction. Accordingly, the traveling roller 2 is rotatably supported with respect to the case 8 on the outer side of the one side surface of the case 8. The traveling roller 2 rotates on the tire inner surface Ta in a circumferential direction with an outer circumferential surface thereof in contact with the tire inner surface Ta. A traveling roller gear 2b having a smaller diameter than the traveling roller 2 is connected to one side of the traveling roller 2 in the width direction. The traveling roller 2 and the traveling roller gear 2b integrally rotate.

The outer circumferential surface of the traveling roller 2 may be made of a material unlikely to slip with respect to the tire inner surface Ta, such as rubber or resin. In this embodiment, the traveling roller 2 is provided only on the outer side of the one side surface of the case 8, but the traveling roller 2 may be provided on the outer sides of both side surfaces of the case 8.

The rotary drum 3 is a cylindrical body or a columnar body formed of metal, resin, or the like. A center shaft 3a of the rotary drum 3 extends in the tire axial direction and is supported by both side surfaces of the case 8. The rotary drum 3 supported by the case 8 in this manner rotates about the center shaft 3a. An outer circumferential surface of the rotary drum 3 is opposed to the tire inner surface Ta with an interval therebetween. A lower portion of the rotary drum 3 protrudes downward and is exposed from the case 8. The band-like member B supplied from the outside of the tire T is introduced and wound onto the outer circumferential surface of the rotary drum 3 via the guide portion 6.

One end side of the center shaft 3a extends to the outside of the case 8, and a rotary drive gear 4 is attached to the one end side. Accordingly, the rotary drive gear 4 disposed on the outer side of one side surface of the case 8 rotates about the center shaft 3a together with the rotary drum 3.

A transfer gear 5 is rotatably supported on the outer side of the one side surface of the case 8. The transfer gear 5 is interposed between the rotary drive gear 4 and the traveling roller gear 2b and meshes with each. Accordingly, rotation directions of the traveling roller 2 and the transfer gear 5 are opposite directions, and rotation directions of the traveling roller 2 and the rotation drum 3 are the same direction. The rotary drum 3 is rotationally driven by rotation of the traveling roller 2 rolling on the tire inner surface Ta.

The gear ratio between each of the rotary drive gear 4, the traveling roller gear 2b, and the transfer gear 5 is determined as appropriate. The rotary drive gear 4, the traveling roller gear 2b, and the transfer gear 5 may be, for example, prepared in plurality. The plurality of prepared gears have respectively different numbers of teeth, and the ratio of the rotational speed of the rotary drum 3 to the rotational speed of the traveling roller 2 (the rotation ratio) can be changed by changing the combination of the respective gears used together (the gear ratio). The rotary drive gear 4, the traveling roller gear 2b, and the transfer gear 5 function as an adjustment unit for adjusting a tension of the band-like member B supplied from the outside of the tire T.

In this embodiment, a large number of projection portions 3b are provided on the outer circumferential surface of the rotary drum 3 at an interval in the circumferential direction. The projection portions 3b are provided in plurality and in parallel in the width direction of the rotary drum 3 (the tire axial direction). Each of the projection portions 3b bites one surface of the band-like member B introduced onto the outer circumferential surface of the rotary drum 3. Since the projection height of the projection portions 3b from the outer circumferential surface of the rotary drum 3 is set to be smaller than the thickness of the band-like member B, the projection portions 3b do not penetrate the band-like member B in the thickness direction. The projection height of the projection portions 3b is, for example, about 1 mm to 5 mm.

The number of the projection portions 3b is determined as appropriate, but a large number of projections 3b are preferably arranged at an equal interval in the circumferential direction. The number of parallel projection portions 3b is set in accordance with the width of the rotary drum 3 or the band-like member B, and thus may be either one row or a plurality of rows. The shape of the projection portions 3b is, for example, a conical shape, or a polygonal pyramid shape such as a triangular pyramid shape or a quadrangular pyramid shape.

The guide portion 6 is attached in the vicinity of the introduction port 8a so as to project to the outside of the case 8. The guide portion 6 is a guide member through which the band-like member B passes. The guide portion 6 has a function of forcibly changing the advancement direction of the band-like member B sent in the longitudinal direction from the outside of the tire T so as to introduce the band-like member B toward the outer circumferential surface of the rotary drum 3. The guide portion 6 can be completely fixed to the case 8, and can also be made movable so that the receiving direction and the introducing direction onto the rotary drum 3 of the band-like member B can be changed.

In this embodiment, a disc-shaped positioning plate 7 attached to the center shaft 3a is disposed between each side surface of the rotary drum 3 and each side surface of the case 8. Each of the positioning plates 7 has a larger diameter than the rotary drum 3, and the outer circumferential surface of the positioning plate 7 is opposed to the tire inner surface Ta. The interval between the positioning plates 7 in the tire axial direction is slightly larger than the width of the band-like member B.

Each of the positioning plates 7 has a function of positioning the position of the band-like member B in the width direction by interposing the band-like member B therebetween. The interval of the positioning plates 7 in the tire axial direction is preferably capable of changing in accordance with the width of the band-like member B. Note that the positioning plates 7 can be provided optionally.

Next, a procedure of the attaching method of the band-like member to the tire inner surface of an embodiment of the present invention will be described.

First, as illustrated in FIG. 1, the attaching apparatus 1 is disposed on the inner side of the tire T. The support shaft 2a of the traveling roller 2 and the center shaft 3a of the rotary drum 3 are set in a direction parallel to the tire axis CL direction so as to dispose the attaching apparatus 1. The outer circumferential surface of the traveling roller 2 is in contact with the tire inner surface Ta. In this embodiment, both end portions of the support arm 9 are fixed to a fixing member on the outer side of the tire T, so that the outer circumferential surface of the rotary drum 3 is disposed so as to oppose the tire inner surface Ta with an interval therebetween. The outer circumferential surface of each of the positioning plates 7 is also disposed so as to oppose the tire inner surface Ta.

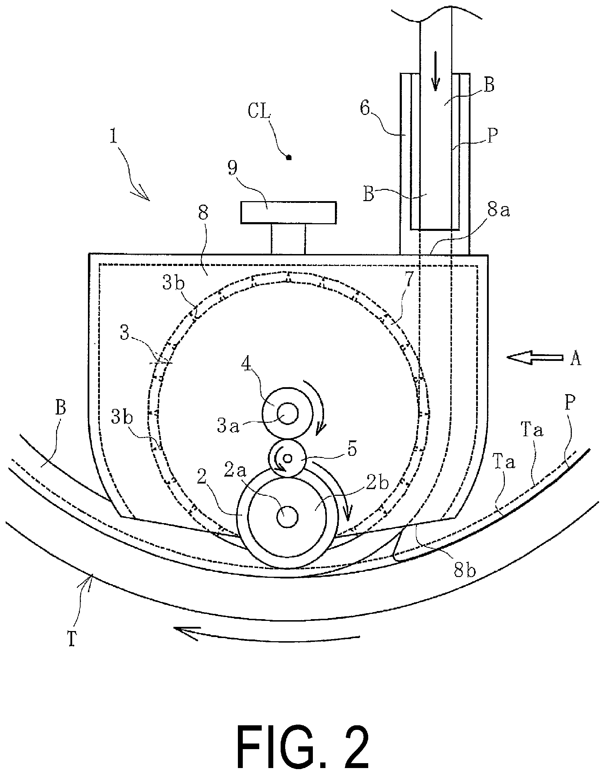

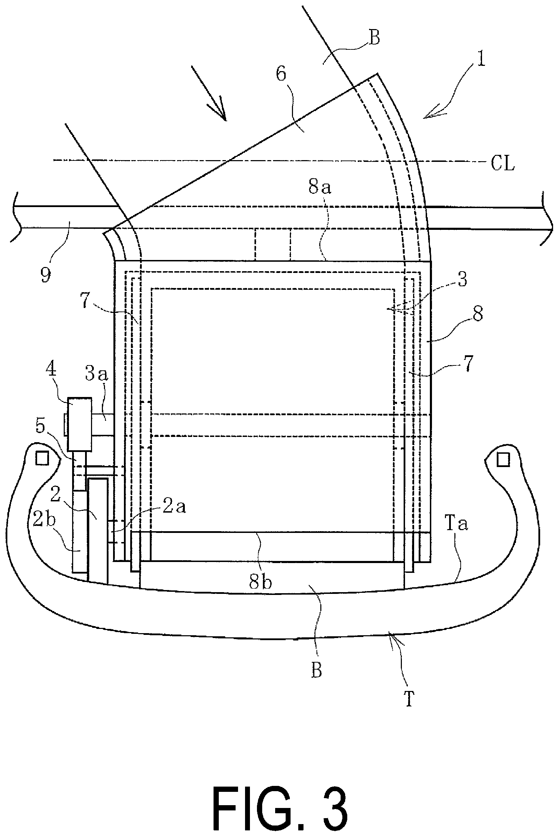

Next, the band-like member B is set on the attaching apparatus 1. Specifically, one end portion of the band-like member B, which is wound onto a winding core or the like disposed outside the tire T, is introduced between the inner surface of the case 8 and the outer circumferential surface of the rotary drum 3 via the guide portion 6 as exemplified in FIGS. 2 and 3, and is disposed between the positioning plates 7. The band-like member B is wound around the outer circumferential surface of the rotary drum 3 with the surface of the release paper P facing the inner surface of the case 8.

In the vicinity of the tire inner surface Ta, the release paper P is peeled from the band-like member B and the band-like member B is attached to the tire inner surface Ta. The band-like member B from which the release paper P is peeled is inserted between the tire inner surface Ta and the outer circumferential surface of the rotary drum 3, and the one end portion of the band-like member B is compression-bonded to the tire inner surface Ta by the outer circumferential surface of the rotary drum 3. In this state, setting of the attaching apparatus 1 and the band-like member B with respect to the tire T is completed.

Next, the traveling roller 2 is relatively moved in the circumferential direction of the tire T. In this embodiment, the tire T is rotated about the tire axis CL by the drive roller 13 that is in contact with the outer surface of the tire T so as to perform rotational drive. Since the attaching apparatus 1 is fixed at a constant position by the support arm 9, when the tire T is rotated in the circumferential direction, the traveling roller 2 rolls on the tire inner surface Ta and moves relative to the tire T in the circumferential direction.

Rotation of the traveling roller 2 rolling in the tire circumferential direction is transmitted to the traveling roller gear 2b, the transfer gear 5, and the rotation drive gear 4, so as to rotationally drive the rotary drum 3. In accordance with the rotation of the rotary drum 3, the band-like member B supplied from the outside of the tire T is sequentially wound onto the outer circumferential surface of the rotary drum 3 through the guide portion 6 and the inlet 8a.

The band-like member B wound onto the outer circumferential surface of the rotary drum 3 is sent toward the outlet 8b, and is sequentially fed from the outlet 8b to the outside of the case 8. The fed band-like member B is pressed by the outer circumferential surface of the rotary drum 3 and is compression-bonded and attached to the inner surface Ta of the tire.

When the tire T is rotated one round, the band-like member B is attached to the entire circumference of the tire inner surface Ta. Thereafter, the band-like member B is cut at a position overlapping an end surface serving as an adhesion start point, and the band-like member B set on the attaching apparatus 1 and the band-like member B attached to the tire inner surface Ta are separated from each other. Cutting operation of the band-like member B is performed by, for example, an operator using a cutter or the like. A cutting tool for cutting the band-like member B may be provided on the attaching apparatus 1 as well.

As described above, according to an embodiment of the present invention, the band-like member B can be continuously introduced from the outside of the tire T and wound onto the outer circumferential surface of the rotary drum 3 that is rotationally driven by rotation of the traveling roller 2 rolling on the tire inner surface Ta. Since the band-like member is continuously compression-bonded to the tire inner surface Ta by the outer circumferential surface of the rotary drum 3 in rotation, it is unnecessary to cut the band-like member B by the attaching length or to wind the band-like member B for each tire T in advance. Accordingly, it is advantageous for improving the efficiency of attachment work while reducing the man-hours.

Since the projection portions 3b provided on the outer circumferential surface of the rotary drum 3 bite into the wound band-like member B, the band-like member B is unlikely to be displaced with respect to the outer circumferential surface of the rotary drum 3. Accordingly, the band-like member B can be smoothly attached to the tire inner surface Ta.

In this embodiment, the tension of the band-like member B supplied from the outside of the tire T can be adjusted by changing the gear ratio of the rotary drive gear 4, the traveling roller gear 2b, and the transfer gear 5 used together. By appropriately adjusting the tension, it is possible to prevent the band-like member B from being stretched or wrinkled, so that the band-like member B can be accurately attached to the tire inner surface Ta regardless of the skill of the operator.

In this embodiment, since the positioning plate 7 is provided, the band-like member B fed out from the rotary drum 3 can be positioned at an appropriate position in the tire lateral direction. Accordingly, it is advantageous for accurately attaching the band-like member B to the tire inner surface Ta.

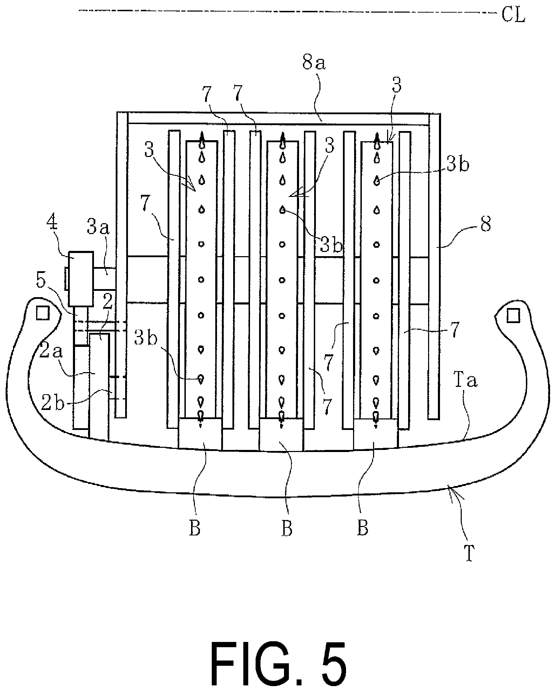

In the embodiment of the attaching apparatus 1 illustrated in FIG. 5, a plurality of rotating drums 3 are coaxially provided in parallel at an interval in the tire axial direction. The position of each rotary drum 3 in the tire lateral direction is adjusted and set at a desired position. Positioning plates 7 are disposed on both sides of each rotary drum 3.

In this embodiment, a plurality of band-like members B can be attached to desired positions in parallel in the width direction of the tire inner surface Ta at one time. Each rotary drum 3 has an appropriate width in accordance with the width of the band-like member B to be attached.

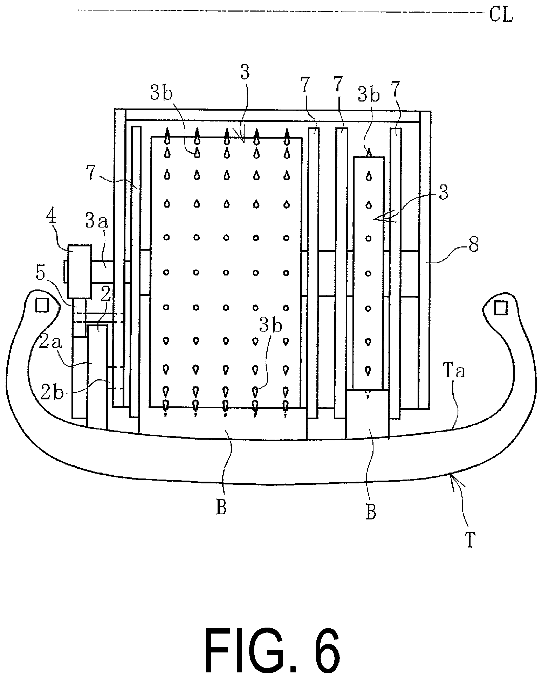

In the embodiment of the attaching apparatus 1 illustrated in FIG. 6, rotating drums 3 having different outer diameters are provided coaxially in parallel at intervals in the tire axial direction. The position of each rotary drum 3 in the tire lateral direction is adjusted and set at a desired position. Positioning plates 7 are disposed on both sides of each rotary drum 3.

In this embodiment, a plurality of band-like members B having different thicknesses can be attached to desired positions in parallel in the width direction of the tire inner surface Ta at one time. Each rotary drum 3 has an appropriate width in accordance with the width of the band-like member B to be attached. In this manner, the outer diameter of at least one rotary drum 3 may differ from the outer diameter of another rotating drum 3 among the rotary drums 3.

A method of relatively moving the attaching apparatus 1 in the circumferential direction of the tire T is not particularly limited. For example, by providing a drive unit such as a motor to the rotary drum 3 or the traveling roller 2 and rotationally driving the traveling roller 2 by the drive unit, it is also possible to relatively move the attaching apparatus 1 in the circumferential direction in a state in which the tire T is rotated while maintaining the attaching apparatus 1 in is maintained at a constant position. Alternatively, by rotationally driving the traveling roller 2 in a state in which the tire T is fixed at a constant position, the attaching apparatus 1 can be relatively moved in the circumferential direction of the tire T.

The case 8 is not essential, and thus can be omitted. In this case, a frame or the like for supporting the rotary drum 3 is provided instead of the case 8. Embodiments of the present invention can be used when attaching another band-like member B without being limited to a sound absorbing member.

### Reference Signs List

1 Attaching apparatus
2 Traveling roller
2a Support shaft
2b Traveling roller gear
3 Rotary drum
3a Center shaft
3b Projection portion
4 Rotary drive gear
5 Transfer gear
6 Guide portion
7 Positioning plate
8 Case
8a Inlet
8b Outlet
9 Support arm
T Tire
Ta Tire inner surface
CL Tire axis
B Band-like member
P Release paper

## Claims

1. An attaching apparatus for attaching a band-like member to a tire inner surface for attaching a band-like member to an inner surface of a tire, the attaching apparatus for attaching a band-like member to a tire inner surface comprising:
a traveling roller that rolls on the inner surface of the tire in a circumferential direction;
a rotary drum disposed on an inner side of the tire, the rotary drum comprising an outer circumferential surface opposed to the inner surface of the tire with an interval therebetween; and
a guide portion that introduces and winds a band-like member supplied from an outside of the tire onto the outer circumferential surface of the rotary drum in rotation;
the rotary drum being rotationally driven by rotation of the rolling traveling roller; and
the band-like member being compression-bonded and attached to the inner surface of the tire by the outer circumferential surface of the rotary drum.

2. The attaching apparatus for attaching a band-like member to a tire inner surface according to claim 1, wherein
a plurality of projection portions are provided on the outer circumferential surface of the rotary drum at an interval in the circumferential direction, the projection portions biting one surface of the band-like member.

3. The attaching apparatus for attaching a band-like member to a tire inner surface according to claim 1 or 2, wherein
a plurality of the rotating drums in parallel are provided coaxially at an interval in a tire axial direction.

4. The attaching apparatus for attaching a band-like member to a tire inner surface according to claim 3, wherein
an outer diameter of at least one rotary drum differs from an outer diameter of another rotary drum among the plurality of rotating drums.

5. The attaching apparatus for attaching a band-like member to a tire inner surface according to any one of claims 1 to 4, further comprising
an adjustment unit configured to adjust a tension of the band-like member introduced and wound onto the outer circumferential surface of the rotary drum.

6. An attaching method for attaching a band-like member to a tire inner surface for attaching a band-like member to an inner surface of a tire, the attaching method for attaching a band-like member to a tire inner surface comprising:
disposing, on an inner side of the tire, a traveling roller, and a rotary drum comprising an outer circumferential surface opposed to the inner surface of the tire with an interval therebetween;
rotationally driving the rotary drum by rotation of the rolling traveling roller;
introducing and winding a band-like member supplied from an outside of the tire to the outer circumferential surface of the rotary drum in rotation via a guide portion; and
compression-bonding and attaching the band-like member to the inner surface of the tire by the outer circumferential surface of the rotary drum.
